# EUROPEAN PATENT SPECIFICATION

(11) **EP 1 214 150 B1**
(45) Date of publication and mention of the grant of the patent: **11.05.2005**
(21) Application number: 00964922.9
(22) Date of filing: 28.08.2000
(51) Int. Cl.: B02C 19/18, A23N 1/02, A23L 1/30

(54) **LIBERATING INTRACELLULAR MATTER FROM BIOLOGICAL MATERIAL**
VERFAHREN ZUR FREISETZUNG VON INTRAZELLULÄREN KOMPONENTEN AUS BIOLOGISCHEN MATERIALEN
LIBERATION DE MATIERE INTRACELLULAIRE D'UNE MATIERE BIOLOGIQUE

(30) Priority: 30.08.1999 US 385152
(43) Date of publication of application: 19.06.2002
(73) Proprietor: Pulsewave LLC., Englewood, CO 80112 (US)
(72) Inventor: HAHN, William, E., Aurora, CO 80014 (US); ARNOLD, Charles, A., Englewood, CO 80110 (US)
(74) Representative: Wagner, Karl H., Dipl.-Ing.
(86) International application number: PCT/US2000/023548
(87) International publication number: WO 2001/015809

(56) References cited:
- WO-A-99/03589
- FR-A- 2 701 664
- GB-A- 143 196
- US-A- 2 750 120
- US-A- 3 687 180
- US-A- 4 151 794
- US-A- 5 330 913
- US-A- 5 747 088
- DATABASE WPI Week 198745 Derwent Publications Ltd., London, GB; AN 1987-319141 XP002157500 & SU 1 292 797 A (VNII KONSERVNOJ OVOSHCHESUSHIL)
- DATABASE WPI Week 199225 Derwent Publications Ltd., London, GB; AN 1992-206428 XP002157501 & SU 1 663 021 A (LVOVSKIJ POLT INST)
- DATABASE WPI Week 198140 Derwent Publications Ltd., London, GB; AN 1981-73136d XP002157502 & SU 794 072 A (INST EXPERIMENTALNOI VETERINAR)
- DATABASE WPI Week 198736 Derwent Publications Ltd., London, GB; AN 1987-256045 XP002157515 & SU 1 286 232 A (INST TEKHN TEPLOFIZIKI AN USSR)

## Description

### Background of the Invention

This application relates to methods of liberating and extracting intracellular material from plant, fungal, animal and bacterial cells.

Many plants, animals, bacteria, and fungi include useful material within their cells. These materials may be useful in pharmaceuticals, nutritional supplements, lotions, and the like. Others may have agricultural or industrial applications. For example, within the cells of the kava plant there are small granules of kava lactones, which are neurologically active. Pacific islanders cultivate the kava plant and make a sedative tea from chopped up pieces of kava roots, which has about 5-15% kava lactones by dry weight. A powder made from kava plants is sold in a capsule form as a nutritional supplement. However, because of the strength of the cellulose walls of the kava plants, it is difficult to extract the granules of kava lactones.

All plant and fungal cell walls are made primarily of cellulose, which is generally in the form of long, cross-linked strands. Such cell walls, which provide mechanical support for plants and fungi, are necessarily very sturdy and resistant to being easily opened or broken apart by mechanical or chemical means.

One method of breaking open the cell walls to release the material inside is by grinding or milling the plant or fungal material. However, many cell walls are only crushed by grinding or milling and are not substantially broken open. Much desirable material can remain within the shells of the crushed cell walls. Grinding or milling the plant or fungal material mixes together all material from the cells, including the cellulose, which makes it difficult to separate the useful material from unwanted debris. The ground or milled product is impure--the product retains all impurities that were in the stock material before grinding or milling. Because each plant sample may contain a different content of impurities or inactive ingredients, the efficacy of the ground or milled product for its intended purpose can vary widely.

Another method of opening cellulose cell walls to extract intracellular material is with chemicals that break down the cellulose walls. These chemicals may include solvents or acids, which may contaminate the desired material within the cells. Additional processing may be required to remove the chemicals, adding cost to the extraction process. The chemicals also may chemically alter the desired intracellular material, rendering it weakened, useless, or even harmful.

Some material from within cells may be extracted, as with the tea made from kava, by soaking the plant or fungal material in hot or boiling water. This process may leave much of the desired material within the cells. Subjecting the plant or fungal material to high temperatures may also break down the desired material, cause it to react with other material within the cells, or otherwise reduce its efficacy.

US-A-5,330,913 relates to a method of disrupting the chlorella cell walls by cell rupture. The chlorella cells are located in a tight sealed container which also contains glass balls to create a shift from a high-pressure state to a low-pressure state.

According to DATABASE WPI Week 198140 Derwent Publications Ltd., London, GB; AN 1981-73136d XP002157502 & SU 794 072 A (INST EXPERIMENTALNOI VETERINAR), biomass is subjected to a pressure drop from 80-100 atmospheres to the atmospheric pressure which results in cell wall disintegration. In particular, a bacteria suspension is subjected to destructive bursting in a pressure vessel.

GB-A-143,196 relates to the extraction of fatty matter from garbage and other fat-containing matter and discloses to place "green" garbage or other grease or oil containing materials in an extractor and to create therein a negative pressure and then relieve this negative pressure rapidly, the material is then placed under a pressure above atmospheric pressure which is maintained for some time depending on the nature of the material and then this pressure is relieved rapidly. Thereafter, the material is again placed under positive pressure and is caused to be submerged in a fat-solvent. After remaining submerged for some time at this pressure, the pressure is materially increased and maintained for some time. Then, the pressure is relieved for subsequently withdrawing the solvent from the mass.

According to DATABASE WPI Week 198745 Derwent Publications Ltd., London, GB; AN 1987-319141 XP002157500 & SU 1 292 797 A (VNII KONSERVNOJ OVOSHCHESUSHIL), vegetable matter is loaded into a multicompartment extractor and is extracted by a counter-current flow of extractant. During extraction, the solid phase is compressed periodically. The frequencies of the alternating pressure changes in the three stages are 0.2-0.5, 0.5-2.0 and 0.1-0.31 cycles per min. respectively. These cycles are rather slow and gentle and are not adapted to open cell walls to thereby liberate the intracellular material from the cells.

DATABASE WPI Week 199225 Derwent Publications Ltd., London, GB; AN 1992-206428 XP002157501 & SU 1 663 021 A (LVOVSKIJ POLT -INST) relates to the production of extract from milled vegetable material. Saturation cycles of 6-8 sec. alternate with compression cycles of 1-3 sec. and the latter are conducted at pressure changing from 500 to 1100 Pa. The cycles are rather slow and are not adapted to open cell walls to thereby liberate the intracellular material from the cells.

DATABASE WPI Week 198736 Derwent Publications Ltd., London, GB; AN 1987-256045 XP002157515 & SU 1 286 232 A (INST TEKHN TEPLOFIZIKI AN USSR) relates to extraction from solid materials such as belladonna leaves, wherein the solid is contacted with a solvent at reduced and increased pressure under the solution. The increased pressure is produced by allowing the previously heated solution to boil up inside a closed volume. During the reduced pressure phase, overheating by 5-15 °C from the boiling point is maintained while changing the pressure frequency within the limits 0.1-2 Hz. More specifically, the system is heated to 80 °C and held at this temperature for 2 min., while the gas space is connected to the atmosphere. Then, for 1 min., the solution is allowed to boil and the pressure changes at a frequency of 1 Hz between a vacuum of 30 kPa and atmospheric pressure. The pressure changes are rather slow and gentle and are not adapted to open cell walls to thereby liberate the intracellular material from the cells.

### Summary of the Invention

In one aspect, the invention provides a mechanical method of liberating an intracellular material from biological material having cells with cell walls. The method includes subjecting pieces of the biological material to rapidly alternating increasing and decreasing pressures, which may include shock waves, and opening the cell walls with the pressure increases and decreases. This liberates the intracellular material from the cells and produces a heterogenous mixture comprised of cell wall fragments and the intracellular material. It is believed that the rapidly alternating pressures causes the elastic limit of the intercellular bonds to be exceeded, breaking these bonds and separating cells from one another. The elastic limit of the cell walls is also exceeded, causing the cell walls to rend, tear, burst, or otherwise open and further fragment, thereby liberating the intracellular material. The method is particularly useful for liberating interacellular material from plant and fungal matter, which has cell walls formed primarily of cellulose.

In other features of this method, water and volatiles liberated from the cells with the pressure increases and decreases are vaporized such that the mixture has a lower water content and a lower volatile compound content than the biological material. The rapid pressure increases and decreases can also heat the biological material such that the mixture is produced with a temperature above an initial ambient temperature that depends upon the material and operating conditions.

A mill for subjecting the biological material to the pressure changes can include a housing characterized by a first end including an input adapted to introduce the biological material into the housing, a second end including an output adapted to remove the mixture, and longitudinally extending internal sides that form longitudinally extending interior corners where they meet. A rotor assembly within the housing is characterized by a rotatable shaft extending longitudinally through the housing between the first and second ends, and a plurality of rotors coupled to the shaft for rotation therewith. Rotors of the plurality of rotors each include a rotor plate having a peripheral edge forming a plurality of apices, and vanes on a side of the rotor plate which extend approximately radially from respective apices. An orifice plate is positioned between adjacently located pairs of the plurality of rotors. Each orifice plate extends inwardly from the internal sides of the housing to a central aperture which provides an orifice around the shaft. Each of the central apertures are smaller than rotor plates of the corresponding pair of rotors. Circumferentially spaced members, or posts, are located. proximate each of the rotors. These members extend inwardly from the corners of the housing toward the rotors such that the vanes pass closely by the members as the rotor assembly rotates.

The biological material is fed into the input while the rotor assembly rotates, typically at speeds over about 2500 rpm, such that the biological material is entrained in a Coanda flow through the housing. Subjecting the biological material to the alternatingly increasing and decreasing pressure includes causing the bioloigical material to flow in an alternating outward and inward flow around peripheral edges of the rotor plates and through the orifices. The pressure on the biological material is alternately increased and decreased as the flow passes through each orifice and expands in the space below each orifice plate. Compression and decompression also occur in the flow as the vanes pass by flats and open corners of the housing sides and also as the vanes pass closely by the inwardly extending members. These compressions and decompressions may be of different magnitudes and durations. The Coanda flow is substantially without high angle impacts of the biological material on the rotor assembly, the orifice plates or the interior sides of the housing.

The rotors can be angularly offset from each other such that the compressions and decompressions are not synchronized. A series of compressions and decompressions is established at frequencies that depends on the number of rotors, the number of apices on each rotor, the number of sides in the housing, and the number of inwardly extending members. The pressure change frequencies can be tuned to resonate with a particular material and thereby more effectively disintegrate different materials. Hence, this type of mill may be referred to herein as a resonance disintegration (RD) mill.

According to a preferred embodiment of the invention, a method of liberating an intracellular resinous material from cells of bulk plant matter includes subjecting the bulk plant matter to rapid pressure increases and decreases, and opening walls of the cells with the pressure increases and decreases, thereby liberating the resinous material from the cells and producing a heterogenous mixture comprised of cell wall fragments and the resinous material. The method further includes placing particles of the mixture in a liquid, sedimenting particles of the resinous material in the liquid, and removing the sedimented particles of the resinous material.

The liquid may be water, an organic solvent, such as alcohol, or a mixture of water and the organic solvent. The particles placed in the liquid can be a screened fraction of 2the mixture. The method can also include drying the sedimented particles.

The plant matter can include pieces of Piper methysticum (kava), wherein the resinous material includes kava lactones.

According to yet another preferred embodiment of the invention, a method of liberating intracellular material from biological material having cell walls includes subjecting the biological material to rapid pressure increases and decreases, and exceeding the elastic limit of the cell walls with the rapid pressure increases and decreases. This thereby opens the cell walls and liberates the intracellular material. The method may further include the step of exceeding the elastic limit of intercellular bonds between the cells with the rapid pressure increases and decreases, thereby separating cells from each other.

The application of resonance disintegration to process biological materials, and in particular plant and fungal material, has several advantages over mechanical grinding or impact pulverization methods. An RD mill can be run at different speeds and can generate a wide range of different frequencies. Hence it is a versatile instrument for generating forces needed for RD. Heat generated during the rapid process of RD is modest and hence heat sensitive biological molecules are not destroyed. An RD mill can also accommodate materials that have significant water content. During milling, water is driven off resulting in a dry or dryer product.

The process product has a reduced water content. When plant or fungal material is processed, cellulose particles in the product have a generally larger size than other product materials. These properties each make the desired material easier to separate from the cellulose, for example, with an air classifier or by screening. A purer and more efficacious product is produced.

When the water content of the biological material is about 40% by weight or less, the liberated intracellular materials are in the form of a dry powder, which is easy to assimilate by ingestion. The process increases the available exposed surface of the intracellular material for more efficient extraction with aqueous or organic solvents.

The liberating process can be carried out without the use of chemicals or solvents, thereby making a more pure product and reducing the risk of chemically altering the product. Bulk materials, including pieces of plant fungal and animal matter, can be processed with an RD mill. More pure and more concentrated product of intracellular material can be produced according to these methods in a cost effective manner.

An added benefit of using an RD mill to liberate intracellular products from biological material is that it can destroy bacteria, thereby reducing the bacterial load of the processed material.

### Brief Description of the Drawing

The invention may be understood with reference to the following detailed description and the drawings, in which:
FIG. 1 is an elevation view of a milling apparatus which is used to liberate intracellular material from cells of biological material;
FIG. 2 is a top plan view of the mill illustrated in FIG. 1;
FIG. 3 is an elevation view of a rotor assembly housing of the mill illustrated in FIG 1;
FIG. 4 is a cross sectional view through line 4-4 of FIG. 3, and in which a distributor rotor is shown in plan view; FIG. 4A is a detail of FIG. 4;
FIG. 5 is a cross sectional view through line 5-5 of FIG. 4, showing the rotor assembly within the rotor assembly housing.
FIG. 6 is a bottom plan view of the rotor assembly housing;
FIG. 7 is an expanded view of the distributor rotor;
FIG. 8 is a top plan view of an orifice plate of the rotor assembly;
FIG. 9 is a top plan view of a rotor;
FIGS. 10A and 10B are elevation and plan views, respectively, of a rotor assembly support pin;
FIG. 11 is a plan view of a portion of a rotor with another embodiment of a rotor vane; and
FIG. 12 is a cross sectional view through line 12-12 of FIG. 11.

### Detailed Description of the Invention

Intracellular material of plants, animals, fungi and bacterial, which may include proteins, enzymes, fats, amino acids, membrane-bounded materials, starch storage granules, and other types of granules, are often sought after substances of nutritional or pharmaceutical value. The cellulose walls of plant and fungal cells are composed extensively of interwoven and cross-linked strands of cellulose, which presents a substantial barrier to extraction of intracellular contents. The invention provides methods of extracting active or desired intracellular material from the cells of biological material, including from bulk pieces of plants or fungi.

Biological material, including pieces of plant, animal or fungal matter, can be processed in bulk quantities at low cost by using a resonance disintegration milling machine, or RD mill, which will be described in greater detail. An RD mill subjects the biological material to rapidly alternating increasing and decreasing pressures, which may include shock waves, at temperatures that do not change the character of the component material. In an RD mill matter is broken into smaller particles when the natural elasticity of the matter in question is exceeded by the rapid pressure changes. Certain frequencies can be generated in such a mill that will disintegrate given forms of matter. The optimal disintegration frequency will vary among different materials as different substances have different natural resonances. Resonance disintegration is not a random process, which is characteristic of impact types of pulverization. When a given set of frequencies are applied materials composed of numerous components of different elasticity are disintegrated into a broad size range of particles. It is believed that the rapid pressure changes within the mill separate individual cells of the plant and fungal matter from each other and further split, rend, tear, burst, or otherwise open and further fragment the cell walls. This liberates the intracellular material. The mill also liberates and substantially drives off water and volatile materials from the biological material. The liberated intracellular contents are more available for assimilation in the digestive tract.

An RD mill produces a substantially powdered product having a reduced water and volatile component content. When pieces of plant or fungal material are processed, the particles are of various sizes as the natural elasticity of different plant or fungal structures is not the same. Cellulose particles in the product tend to be relatively larger than other particles of material liberated from within the cells. We have also observed, in some cases, that intracellular materials are processed by the mill into size ranges that differ for different materials. The resulting product is a dry heterogenous mixture, including large cellulose and woody fragments and smaller fragments of intracellular material.

Particles of different sizes and density can be separated in some instances using common dry particle fractionation or screening methods. Some other materials from within some cells may be separated from the heterogenous product by water or organic solvent extraction, sedimentation or a combination of such processes. The greater the surface area of a particle relative to its mass, the greater the rate of solubilization and extraction. RD processing of plant materials fragments cells and provides fine particles that can be more readily solubilized.

Large, polymeric molecules are often packaged together and stored within plant and animal cells. An RD mill can liberate these large molecules and further break up large clusters of the molecules without causing large scale damage to the individual molecules. This is possible because RD can be performed under force levels that discriminate between strong co-valent chemical bonds and weaker intermolecular forces that bind molecules together to form clusters or crystals of various sizes.

The process applies to virtually all biological materials composed of cells, including herbal, medicinal and food plants and fungi. Any part of a plant can be processed, including, leaves, stems, roots, bark, and seeds. Fungal matter, such as mushrooms, can be processed in whole or in part.

Herbals that can be processed accordingly to liberate intracellular materials include, without limitation: Alfalfa *(Medicago sativa)*; almonds *(Prunus amygdalus)*; aloe vera *(Aloe barbodenis*, *several strains and related species);* angelica *(Angelica archangelica)*; anise *(Pimpinella anisum)*; arnica *(Arnica montana);* artichoke *(Cynara scalymus)*; astragalus *(Astragalus membranaceous)*; basil *(Ocimum basilicum);* bayberry bark *(Myrica certifera)*; bilberry *(Vaccinium myrtillus)*, black cohosh *(Cimicifuga racemosa);* black walnut *(Juglans nigra)*; blessed thistle *(Cnisus benedictus)*; boneset *(Eupatrorium perfoliatum)*; borage *(Borago officinalis)*; buchu *(Barosma betulina)*; burdock *(Arctium lappa)*; butcher broom *(Ruscus acluteatus)*; calendula *(Calendula officinalis)*; cardamon *(Elletaria* cardamonuum); cayenne *(Capsicum frutenscens)*; caraway *(Carum carui)*; catnip *(Nepeta cataria)*; chamomile *(Matricaria chamomilla)*; chaparral *(Larrea tridentata)*; chaste tree *(Verbenaceae)*; chickweed *(Stellaria media)*; chives *(Allium schoenoprasum)*; cloves *(Caryophyllum aromaticus)*; comfrey *(Symphytum officinale)*; cranberry *(Vaccinium macrocarpon)*; damiana *(Turnea aphrodisiaca)*; devil's claw *(Harpagophytum procumbens)*; dill *(Anethum graveolens)*; dong quai *(Angelica sinensis);* echinacea *(Echinacea angustifolia)*; ephedra *(Ephedra sinica)*; eucalyptus *(Eucalyptus globulus)*; evening primrose *(Oenothera biennis)*; eyebright *(Euphrasin officinalis)*; fennel *(Foeniculum vulgare)*; fenugreek *(Trigonella graecum)*; feverfew *(Chrysanthemum parthenium)*; Fo-Ti *(Polygonum multiforum)*; garlic *(Allium salivum)*; ginger *(Zangiber officinale)*; ginko *(Ginkgo biloba)*; ginseng *(Panox ginseng, Panax quinquefolius)*; golden seal *(Hydroastis canadensis);* gotu kola *(Centella asiatica)*; hawthorne berry *(Crataegus oxyacantha)*; hops *(Humulus lupulus)*; horse chestnut *(Aesculus hippocastum)*; horse tail *(Equisetum arvense)*; jasmine *(Jasminum officinale)*; juniper berry *(Junipera communis)*; kava *(Piper methysticum)*; lady's mantle (*Alchemilla vulgaris)*; lavender *(Lavendula officinalis)*; lemon balm *(Melissa officinalis)*; licorice *(Glycyrrhiza globra)*; marshmallow *(Althea officinalis)*; marijuana *(Cannibis marijuana)*; meadow sweet *(Filipenda ulmaria)*; milk thistle *(Cardus marianus)*; mullein *(Verbascum thapsus)*; mustard *(Brassica hirta);* myrrh *(Commiphora myrrha);* nettle *(Urtica dioicu);* noni *(Indian mulberry) (Morinda citrifolia);* oat fiber *(Avena sativa)*; olive *(Olea europaea)*; onion *(Allim cepa)*; oregon grape *(Mahonia aquifolium)*; osha *(Ligusticum porteri)*; papaya *(Carica papaya);* parsley *(Petroselinum sativum)*; passion flower *(Passiflora incarnata)*; pennyroyal *(Hedeoma pulegioides)*; peppermint *(Mentha piprita)*; pleurisy root *(Asclepias tuberosa)*; psyllium *(Plantago psyllium)*; raspberry leaves *(Rubus idoeus)*; red clover *(Trifolium pratense)*; rosemary *(Rosmarinus officinalis)*; sage *(Salvia offininalis)*; St. John's wort *(Hypericum perforatum)*; sarsoparilla *(Similax officinalsis)*; saw palmetto *(Serenosa serrulata)*; shiitake mushroom *(Lentinus edodes)*; skull cap *(Scutellaria lateriflora)*; suma *(Pfaffia paniculats)*; thyme *(Thymus vulgaris);* tumeric *(Circuma longa)*; uva ursi *(Arctoslaphylos* uva *ursi)*; valerian *(Valeriana officinalis)*; white willow bark *(Salix alba)*; witch hazel *(Hamamelis virginiana)*; yerba santo *(Eriodictyon californicum)*; and yucca *(Yucca liliaceae)*.

Common foodstuffs and agricultural products that also can be processed by an RD mill to liberate intracellular material include: cereal grains, such as wheat, oats, barley, corn, and rice; sorghum; flax; legumes; wheat grass; celery; carrot; parsnips; potato; broccoli; peppers; tea; coffee bean; yeast; fungi; and soybean.

In the following sections, an RD mill apparatus will be described first. Methods of using the RD mill to liberate intracellular material from biological material, such as bulk pieces of plants and fungi, will be described next, with examples.

### RD Mill Apparatus

An RD mill apparatus is described in copending U.S. Patent Application Serial No. 09/290,484, filed April 12, 1999, to Charles A. Arnold, the entire disclosure of which is included herein by reference. Mills of this type include a plurality of rotors arranged alternatingly with orifice plates within a multi-sided housing. The rotors each have vanes on a side of a polygonal-shaped rotor plate. The orifice plates each have a central opening that is smaller than the nearest rotor plates. Members, such as vertical posts or pin members, extend inward from corners of the housing opposite the rotors. Biological material, such as pieces of plants or fungi, which are introduced into the housing above the top-most rotor become entrained in a Coanda flow such that the material passes around each rotor and through each orifice substantially without high angle impacts on the rotors, the orifice plates or the housing. The rotors, the orifice plates, the walls of the housing, and pins are arranged such that the flowing material is subjected to a series of rapid pressure changes which break up the material into smaller pieces.

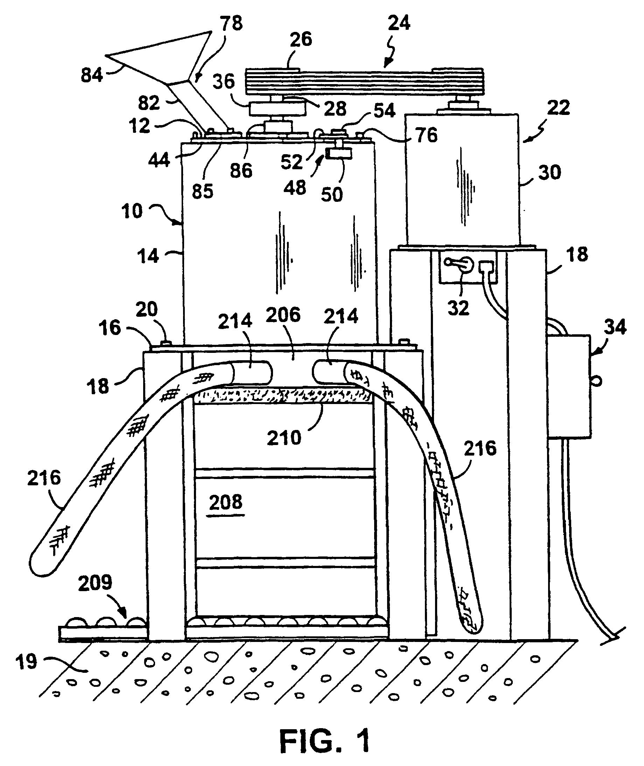

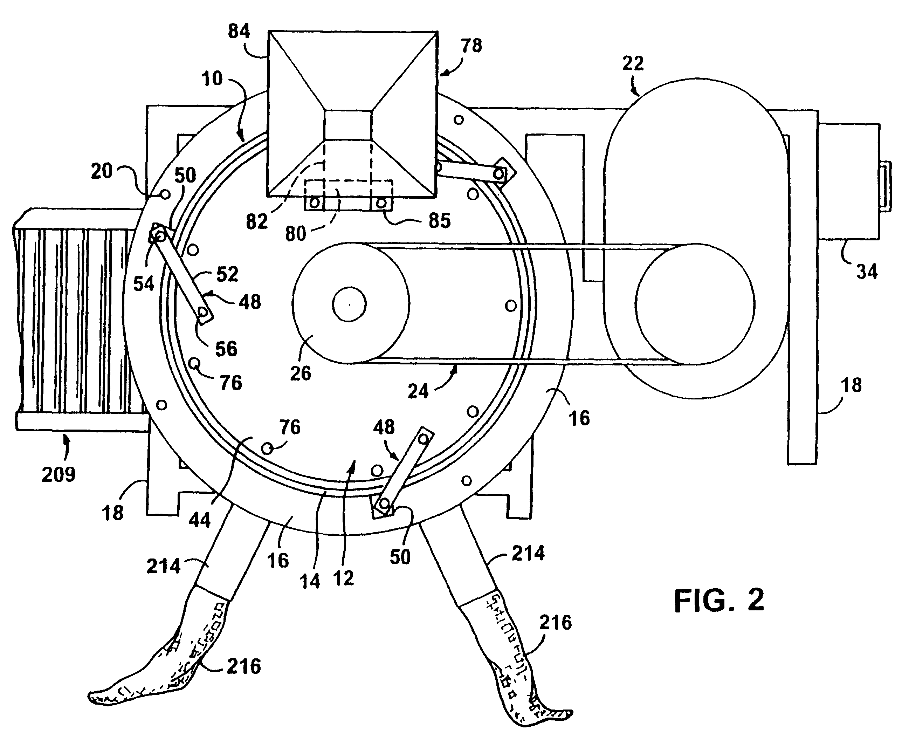

Referring to FIGS. 1 and 2, an RD mill 10 includes a housing 12 containing a rotor assembly 38, which will be described in detail below. Housing 12 is surrounded by a cylindrical shield 14 that is supported from an annular plate 16 by a free-standing support frame 18 on a concrete slab 19. Annular plate 16 is welded to shield 14 and secured to frame 18 with bolts 20.

Frame 18 also supports a motor assembly 22, which provides rotational power to the rotor assembly via a single four-grooved belt 24 coupling to a variable mechanical sheave 26. Sheave 26 is connected to a rotor shaft 28 that expends through housing 12. Rotor shaft 28 is fabricated from 2 inch diameter, 4140 steel rod. In the described embodiment motor assembly 22 includes a 25 hp, 230 V, three phase motor 30 that has a variable speed control 32. Motor assembly 22 receives power from a fusible disconnect 34. The variable mechanical sheave and control 32 permit the speed of rotor shaft 28 to be continuously varied between about 600-3800 revolutions per minute (rpm). A sprocket assembly 36 attached to shaft 28 is used to measure the actual rotational speed of shaft 28. A shroud (not shown) can be used to cover belt assembly 24.

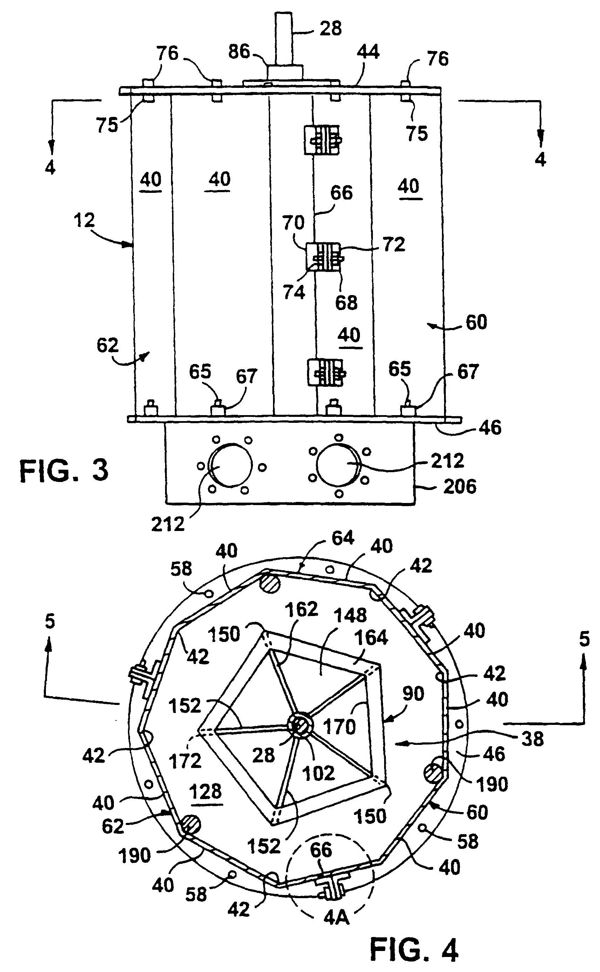

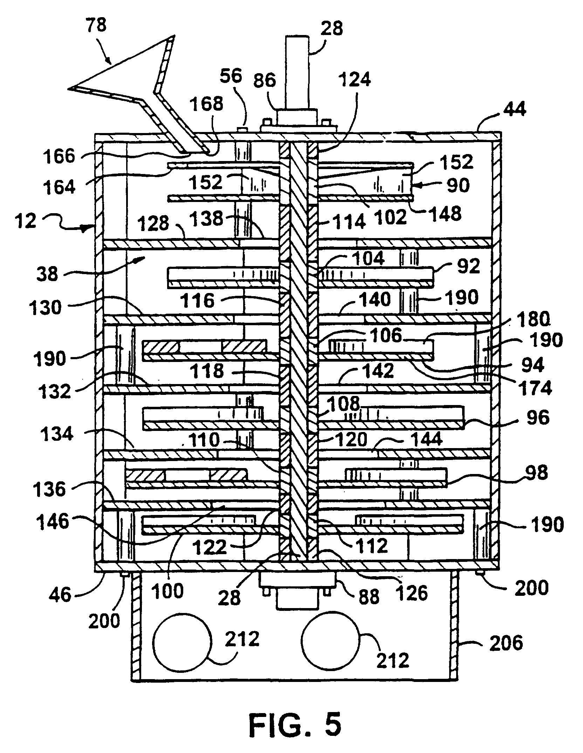

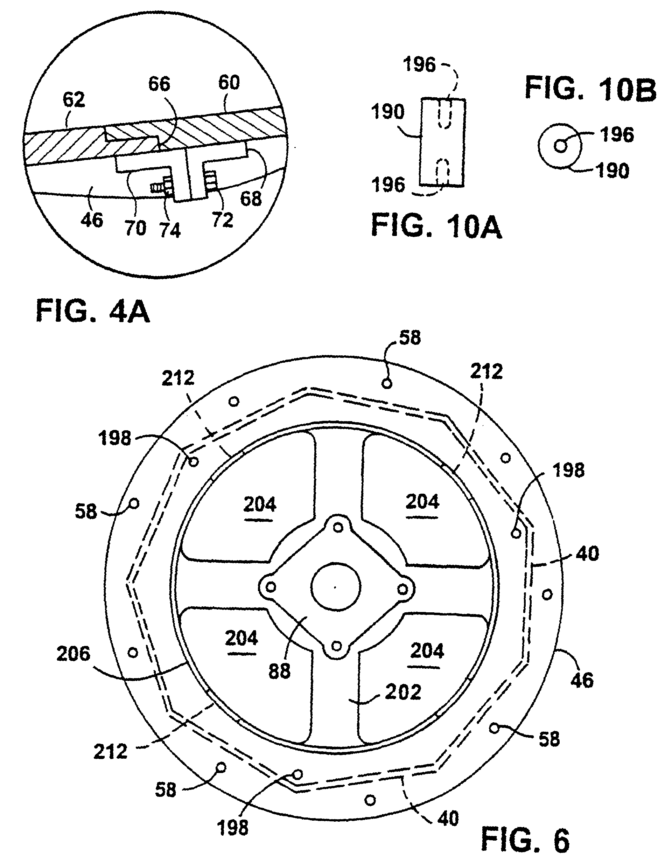

Referring now also to FIGS. 3 and 4, housing 12 has nine longitudinally extending side walls 40 forming a regular polygon shape in latitudinal cross section. The interior surface of housing 12 has an inscribed diameter of approximately 23.5 inches. Sides 40 form 40° apices, or interior corners 42, where they meet. Sides 40 and interior corners 42 extend longitudinally between a top plate 44 and a bottom plate 46. Top and bottom plates 44, 46 are approximately 30.5 inches apart. Top plate 44 is rigidly tied to shield 14 with three strap assemblies 48 (FIGS. 1 and 2). Strap assemblies 48 each include a bracket 50 welded to the outer surface of shield 14, a rigid strap 52, and bolts 54, 56 connecting strap 52 to bracket 50 and top plate 44, respectively.

Sides 40 are formed of three panels 60, 62, 64, each including two full sides 40 and two partial sides 40, and three interior corners 42. Referring now also to FIG. 4A, each pair of panels, e.g., 60 and 62, is joined with an overlapping seam 66 located about midway between corners 42. Brackets 68 are welded to panel 60, and brackets 70 are welded to panel 62 adjacent to seam 66. Bracket pairs 68, 70 are tied together with bolts 72 and nuts 74. A silicon based sealant is used at seam 66 and other joints between pieces of housing 12 to make housing approximately airtight.

Referring again to FIGS. 2 and 3, bottom plate 46 is supported from a portion of annular plate 16 that extends radially inward a short distance from shield 14. A gasket (not shown) providing a liquid tight seal is placed between annular plate 16 and bottom plate 46. A J-bolt arrangement (not shown) is employed for ensuring a positive seal with the gasket. Bottom plate 46 is secured to panels 60, 62, 64 with nine threaded fasteners 65 that extend through apertures formed in respective fittings 67 attached to panels 60, 62, 64, and that screw into threaded holes 58 arrayed around the periphery of bottom plate 46. Top plate 44 is bolted to threaded fittings 75 on panels 60, 62, 64 with threaded fasteners 76.

A feed chute 78 for introducing material to be pulverized into housing 12 extends through an aperture 80 in top plate 44. For clarity of illustration, feed chute 78 is illustrated at a position in FIG. 2 that is different from the position depicted in FIG. 1. Feed chute 78 includes a rectangular shaped tube 82 that is oriented relative to the plane of top plate 44 at an angle of approximately 44 degrees. Feed chute 78 also has a funnel 84 at its top end and a bracket 86 for attachment to top plate 44. Tube 82 is approximately 13.25 inches long, extends approximately 1.375 inches below the bottom side of top plate 44, and has interior dimensions of 3 X 4 inches. Tube 82 includes a flange 85 for attaching feed chute 78 to top plate 44, e.g., with threaded fasteners.

The rotor assembly 38 will now be described in detail with reference to FIGS. 1 and 4-6. Rotor assembly 38 includes a rotatable shaft 28 that extends longitudinally through housing 12. Shaft 28 extends through a top bearing assembly 86 that is bolted to top plate 44. Sprocket speed indicator assembly 36 and sheave 26 are positioned on shaft 28 above top bearing assembly 86. A bottom bearing assembly 88 is bolted to the bottom side of bottom plate 46. Shaft does not extend through bottom bearing assembly 88.

Within housing 12, there are six longitudinally spaced rotors 90, 92, 94, 96, 98, 100, each being fixed to a respective hub 102, 104, 106, 108, 110, 112 that is coupled to shaft 28 by two keys (not shown). Spacers 114, 116, 118, 120, 122, which are also keyed onto shaft 28, are positioned between adjacent pairs of hubs 102, 104, 106, 108, 110, 112. Spacers 124 and 126 are positioned adjacent top plate 44 and bottom plate 46, respectively. Spacer 124 is also secured to shaft 28 with a set screw (not shown). Shaft 28 can be fabricated is made of 2 inch diameter 4140 alloy steel. The diameter of each spacer is approximately 3.5 inches. The longitudinal position of one or more than one of rotors 90, 92, 94, 96, 98, 100 can be adjusted by changing the length one or more of spacers 114, 116, 118, 120, 122, 126.

Orifice plates 128, 130, 132, 134 and 136 are positioned between adjacent pairs of rotors 90, 92, 94, 96, 98 and 100. Orifice plates 128, 130, 132, 134, 136 each extend to housing sides 40 such that there is no gap between the edge of an orifice plate and the housing sides 40. A gasket or other sealing means can be used to assure that there is no space between orifice plates 128, 130, 132, 134, 136 and housing sides 40. Each of orifice plates 128, 130, 132, 134, 136 includes a central aperture, which, with its respective spacer 114, 116, 118, 120, 122, provides an annular shaped orifice 138, 140, 142, 144, 146 therebetween.

In the described embodiment, each of shield 14, annular plate 16, top plate 44, bottom plate 46, panels 60, 62, 64, rotors 90, 92, 94, 96, 98, 100, and orifice plates 128, 130, 132, 134, 136 are fabricated of 0.5 inch thick low-carbon steel, such as, for example, 1020 steel.

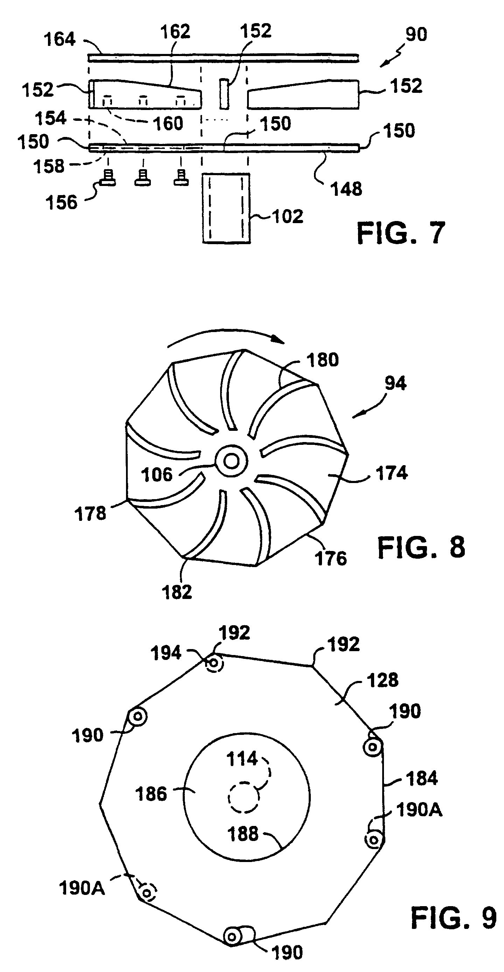

Referring now also to FIG. 7, the topmost rotor 90, which will also be referred to as a distributor rotor, is positioned closest to where material is fed into housing 12 via feed chute 78. Distributor rotor 90 includes a distributor rotor plate 148 having a regular pentagonal-shaped peripheral edge forming five apices, or outside corners 150. Five distributor rotor vanes 152 extend upwards toward top plate 44 from the top side of distributor rotor plate 148 (only three vanes are shown in FIG. 7 for clarity). Each distributor rotor vane 152 also extends approximately radially inward from an outside corner 150 to hub 102. Vanes 152 can be fixed to distributor rotor plate 148 and hub 102 by welding. Alternatively, each distributor rotor vane 152 can fit into a corresponding slot 154 formed in distributor rotor plate 90, and secured by threaded fasteners 156 that extend through apertures 158 in distributor rotor plate 90 and screw into corresponding threaded holes 160 in distributor rotor vane 152. An upper edge 162 of each distributor rotor vane 152 is sloped upwards from an elevation of about 1 inch at 102 to an elevation of about 1.5 inches near the periphery of plate 148. A pentagon-shaped distributor ring 164, which is about 1.5 inches wide, is welded to the upper edges 162 of distributor rotor vanes 152.

Each of distributor rotor plate 148, distributor ring 164, and distributor rotor vanes 152 are fabricated from 0.5 inch low-carbon steel plate. Distributor rotor is circumscribed by a 17 inch diameter circle and is approximately 2.7 inches high. Distributor ring 164 is located approximately 1.625 inches below top plate 44 and approximately 0.25 inches below a discharge opening 166 of feed chute 78. Discharge opening 166 of feed chute 78 is positioned such that when a center of a chord of distributor ring 164 is aligned with discharge opening 166, a radially innermost edge 168 of discharge opening 166 extends about 0.5 inches inwardly beyond an inner edge 170 of distributor ring 164. When a corner 150 of distributor rotor 90 is aligned with feed chute 78, the outside of discharge opening 166 is completely inside distributor ring 164. This provides a large area to feed material into slots between distributor rotor vanes 152, and discharges the material from feed chute 78 onto rotor 90 as radially distant from hub 102 as possible. For reasons that will be discussed below, each vane 152 is positioned such that when rotor assembly is spinning, a trailing outer edge 172 of each -distributor rotor vane 152 is shaped to be about aligned with the peripheral edge of distributor rotor plate 148 at a trailing edge of an apex 150, either without any overlap or with distributor rotor vanes 152 extending slightly over the edge of distributor rotor plate 148.

Other rotors 92, 94, 96, 98, 100 are designed differently from distributor rotor 90, but similarly to each other. Rotor 94 will be described as an example, with reference to FIG. 8. Rotor 94 includes a rotor plate 174 having a regular nine-sided polygonal peripheral edge 176 forming nine apical corners 178. Rotor plate 174 is welded or otherwise rigidly coupled to hub 106. Rotor 94 also includes nine curved vanes 180, each extending approximately radially inward toward hub 106 from a respective one of the apical corners 178. Vanes 180 are approximately six inches long and extend approximately one inch above rotor plate 174, which is about 0.5 inches thick. For most uses of mill 10, the interior curve of each of vanes 180 faces into the direction in which rotor assembly turns. Rotor plate 174 is fabricated from 0.5 inch low-carbon steel plate, and vanes 180 are fabricated from 0.5 inch wall, 8 inch outer diameter steel tubing. Vanes 180 are set in respective 0.125 inch deep grooves (not shown) formed on an upper face of rotor plate 174, and secured in place with three threaded fasteners (not shown) that extend through apertures (not shown) formed in rotor plate 174, in a manner similar to that described above with reference to distributor rotor 90 illustrated in FIG. 7. This arrangement permits simple removal and replacement of vanes 180. Outer trailing edges 182 of vanes 180 are beveled at an angle to align with peripheral edge 176 of rotor plate 174 and such that trailing edge 182 extends slightly over edge 176 of rotor plate 174 on the trailing side of an apical corner 178.

The other rotors, rotors 92, 96, 98 and 100, are configured similarly to rotor 94, each having a nine-sided peripheral edge 176 and curved vanes 180 extend radially inward from apical corners 178 toward respective hubs 104, 108, 110 and 112. In the embodiment illustrated in FIG. 5, rotors 92, 94, 96, 98 and 100 are circumscribed by circles having diameters of 17, 19, 21, 21, and 21 inches, respectively. Each of vanes 180 is approximately 6 inches long about its outer perimeter and shaped at its apical corner 182 so that there is a slight overlap between vane 180 and rotor plate 174 at its trailing edge 182. Each of rotors has a height of approximately 1.5 inches. Because rotor 92 is smaller than the other rotors and vanes 180 are the same size on all rotors 92, 94, 96, 96, 100, each of vanes 180 on rotor 92 extend approximately to hub 104, whereas vanes 180 on rotors 94, 96, 98, 100 do not extend all the way to hubs 106, 108, 110, 112, respectively, a gap being provided therebetween.

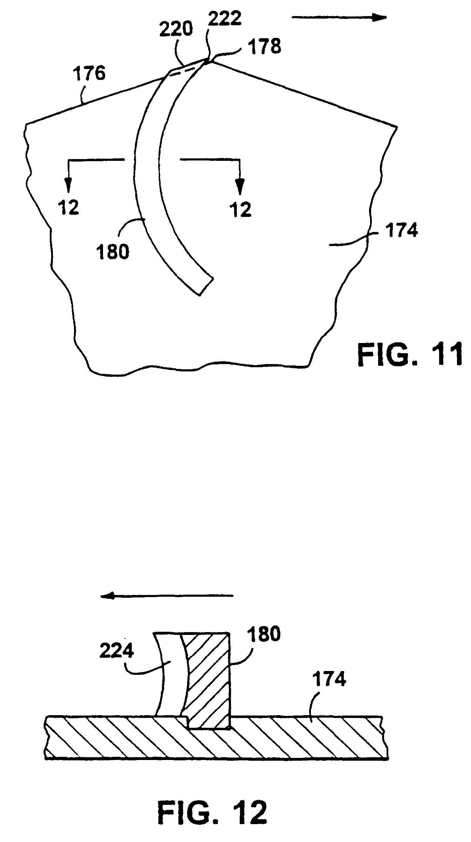

Referring now to FIG. 11, each of vanes 180 may be positioned to provide a small overhang 220 over the edge 176 of the rotor plate to which it is attached. Overhang 220 would be no more than about a thirty-second of an inch, and would enhance the flow through mill 10. Note that vane 180 illustrated in FIG. 11 is also positioned such that overhang 220 is shaped similar to edge 176 of rotor plate 174, and an outer tip 222 of its leading surface 224 is positioned about over apical corner 178. The arrow in the figure indicates a direction of rotation.

Referring now to FIG. 12, vanes 180 may also be modified to have a curved profile, like a turbine blade, on its leading surface 224 with respect to a direction of rotation (arrow) to provide a more efficient pumping action.

Referring now also to Fig. 9, orifice plate 128 can be fabricated from 0.5 inch low-carbon steel plate. Its peripheral edge 184 forms a nine-sided polygon sized to fit closely against sides 40 of housing 12. Orifice plate 128 includes a central aperture 186 formed by inner rim 188, which, with spacer 114, provides annular-shaped orifice 138 therebetween. Orifice plates 130, 132, 134, and 136 are similarly configured. Orifice plates 128, 130, 132, 134, and 136 have apertures 186 with diameters of 7, 8, 9, 10 and 11 inches, respectively.

Referring back to FIGS. 4 and 5, and also to FIGS. 10A and 10B, orifice plates 128, 130, 132, 134, 136 are supported independently of panels 60, 62, 64 by support pins 190. Support pins 190 can be fabricated from 2 inch diameter steel rod. Three equally spaced apart pins 190 are positioned between each neighboring pair of the orifice plates. Each support pin 190 is located at an apical corner 192 of an orifice plate so that it is adjacent an interior corner 42 of housing. As shown in FIGS. 5 and 9, support pins 190 on one side of an orifice plate, e.g. orifice plate 128, are offset by one apex (40°) from support pins 190A on the other side of that orifice plate.

Support pins 190 are attached to the orifice plates by threaded fasteners 194, e.g., bolts, that extend into counter-sunk through holes (not shown) formed in the orifice plates and into threaded holes 196 formed in pins 190. Three support pins 190 that are attached to an upper side of orifice plate 128 can also be attached to top plate 44 with bolts 56, which are also employed to hold straps 52 as described above with reference to FIG. 2. Three support pins 190 that are attached to a bottom side of orifice plate 136 :an also be attached to bottom plate 46. Bottom plate 46 includes three apertures 198 through which threaded fasteners 200 (shown in FIG. 5) can be inserted for fastening to these three pins 190.

Referring again to FIG. 6, bottom plate 46 includes a web 202 forming four apertures 204 through which pulverized material is discharged from housing 12. A 23 inch diameter skirt 206 depends from bottom plate 46 just outside of apertures 204. Web 202 supports rotor assembly 38 from bottom bearing assembly 88, which is bolted to web 202. The size of web 202 is made as small as possible to maximize the size of apertures 204 within skirt 206.

The diameter of skirt 206 is sized to fit into a 55 gallon open barrel 208, which rests on rollers 209. A fabric belt 210 is employed between skirt 206 and barrel 208 to inhibit fine pulverized particles from escaping. Skirt 206 includes four apertures 212 (only two shown in FIG. 3). Each aperture 212 includes a bolt circle employed for attaching a respective 6 inch diameter tube 214 (only two shown in FIGS. 1 and 2). Tubes 214 extend approximately radially outward from skirt 206, and each tube 214 has a fabric filter bag 216 removably attached to it. Air is exhausted from mill 10 through tubes 214. Filter bags 216 catch fine particles and allow air to pass through. One or more of tubes 214 can be blocked off to increase the back pressure. Increasing the back pressure will result in material flowing through RD mill 10 more slowly, providing more time to break up the material.

In the described embodiment, rotors 90, 92, 94, 96, 98, 100 and orifice plates 128, 130, 132, 134, 136 are positioned as follows: The top surfaces of orifice plates 128, 130, 132, 134, and 136 are respectively located approximately 2.875, 2.125, 1.875, 1.625, and 1.375 below the bottom surfaces of respective rotors 90, 92, 94, 96, and 98. Orifice plates 128 and 130 are approximately 5 inches apart; orifice plate 130 and 132 are approximately 4.5 inches apart; orifice plates 132 and 134 are approximately 4 inches apart; and orifice plates 134 and 136 are approximately 3.5 inches apart. The tops of vanes 180 on rotors 92, 94, 96, 98 and 100 are about 1.375, 1.187, 0.875, 0.625, and 0.5 inches below respective orifice plates 128, 130, 132, 134, and 136. Rotor 100 is positioned approximately 1.75 inches above bottom plate 46. Rotors 92, 94, 96, 98 and 100 are rotated relative to their next nearest rotor by about 7.2 degrees.

It can be seen that rotors 90, 92, 94, 96, 98, 100 of rotor assembly 38 have sizes that generally increase with increasing distance from a top end of housing 12 through which material to be pulverized or otherwise processed is introduced into housing. The smallest rotors 90, 92 are located closest to top plate 44, the largest rotors 96, 98, 100 are positioned closest to bottom plate 46, and an intermediate sized rotor 94 is positioned about midway between top plate 44 and bottom plate 46. This arrangement is particularly adapted for pulverizing large size objects. If the feed material comprises smaller sized particles, on average, the rotors could be of a more uniform, larger size. In some applications, it may be advantageous to have rotors that are all the same size, or to alternate between larger and smaller rotors in some fashion.

In addition, orifices 138, 140, 142, 144, 146 are of generally increasing size with increasing distance from the top end. This arrangement is used to maintain a negative back pressure at each stage. For other applications, this arrangement could be reversed, the orifices could be a more uniform size, or the orifice sizes could be varied in a different manner from one end of housing 12 to the other.

The spacing between each orifice plate and the rotor next below it generally decreases with increasing distance from top to bottom. Moreover, the rotors and orifice plates are positioned such that the spacing between adjacent orifice plates generally decreases from top to bottom. This decreases the volume in stages between the top and bottom of rotor assembly 38.

Material flowing through an orifice in mill 10 first undergoes a velocity increase and an accompanying decrease in pressure. Then, because the available volume decreases at each succeeding stage, the material flowing through mill 10 experiences a rapid compression, which in turn can cause a rapid increase in pressure and/or temperature. The size of the orifice is increased with each succeeding stage to provide a pressure immediately downstream of an orifice that is lower than the pressure immediately upstream the orifice. This negative back pressure that is maintained across each orifice helps to maintain the flow.

As best understood at this time, material introduced into mill 10 with rotor assembly 38 spinning at speeds of approximately 1000 revolutions per minute (rpm) or greater are pulverized primarily by pressure changes, which may include shock waves, which are generated within housing 12. Observations indicate that material fed into feed chute 78, as well as air entering through feed chute 78, is accelerated rapidly and is then entrained into a fluid-like flow through the spinning rotor assembly 38. It appears that the material in the flow is almost immediately subjected to a rapid-fire succession of shock waves, which may begin to break up the feed-stock material even before it reaches the distributor rotor.

The spinning rotors 90, 92, 94, 96, 98, 100 create a very strong air flow through housing 12. It appears that material fed into mill 10 through feed chute 78 is entrained in this flow. The material apparently flows, with the air flow, through mill 10 making minimal contact with sides 40 of housing 12 or with orifice plates 128, 130, 132, 134, 136. This, it is believed, is due to the flow being influenced by the Coanda effect to closely follow the contours of the rotor peripheries 174 and orifice rims 188. For this reason, the flow of material and air through mill is called a "Coanda flow." The Coanda effect helps to reduce high-angle contacts between the flowing material and the component parts of mill 10. Distributor ring 164 acts as a shroud to enhance the Coanda effect.

The Coanda flow rapidly changes direction as it rounds the peripheral edge of each rotor and the rim of each orifice, alternating between a flow that is directed radially outward and a flow that is directed radially inward. The sizes of the orifices increase with each succeeding stage to maintain a negative back pressure throughout rotor assembly 38, which helps to keep the velocity of air and particles sufficiently high to maintain the Coanda flow.

Observations made when pulverizing harder and larger materials, such as 1 inch (2.5 cm) ceramic balls, indicate that when vanes 152, 180 are not positioned on the trailing side of apical corners 150, 178, respectively, rotor plates 148, 174 experience wear, becoming slightly rounded on the underside adjacent and downstream from where vanes 152, 180 attach. This is evidence that the material is entrained in a Coanda flow that closely follows the contour of the periphery of each rotor. The leading side of each rotor vane 152, 180, particularly in the region close to its respective rotor plate 148, 174, also indicates increasing wear with proximity to its outer edge. There is also a tendency for material to ride up the side of the vane as the material is moved radially outward by the vane. However, the wear pattern shows little scoring or pitting, which would be expected if the material was not entrained in a Coanda flow. These are the only areas of rotors at which wear has been noticed. Sides 40 and orifice plates 128, 130, 132, 134, 136 show some evidence of some large particle impacts when pulverizing ceramic balls, but no wearing pattern as observed on the rotors. It is expected that a softer and less dense material, such as pieces of plant or fungi, will experience even fewer collisions with parts of mill 10.

To enhance the Coanda effect on the material flowing past vanes 152 and 180 and around rotor plates 148, 174, outer edges of the vanes can be beveled and aligned with the peripheral edge of the respective rotor plate 150 and 174. The leading edge of each vane 152, 180 should go at least to the respective apex 150, 178 of the respective rotor plate 148, 174. Positioning vanes 152, 180 such that their outer edges are on the trailing side of apical corners 150, 178 should reduce the amount of wear.

Rapid pressure changes, such as shock waves, may be generated each time the flowing material experiences a rapid acceleration, such as when the direction of flow rapidly changes, or experiences a pressure change. Such pressure changes may generate large voltages due to piezoelectric properties of the materials, as they experience rapid compression or decompression. Some places where large accelerations may take place include at discharge opening 166 of feed chute 78, going around vanes 152, 180, going around distributor rotor plate 148 and around rotor plate peripheral edges 176, and going around rims 188 of orifices 138, 140, 142, 144, 146. Large pressure changes may take place when the flow passes through an orifice or when the flow is pumped by a rotor.

A non-uniform electromagnetic field may also be generated within housing 12 as rotor assembly 38 rotates. Rotors 90, 92, 94, 96, 98, 100, as well as housing 12 and orifice plates 128, 130, 132, 134, 136, are all made of low-carbon steel, which is ferromagnetic. The spinning rotors would create a rapidly changing, non-uniform electromagnetic field. These electromagnetic fields could enhance piezoelectric effects in the material in the Coanda flow.

Primary pulsed standing shock waves may also be produced as vanes 152, 180 on rotors 90, 92, 94, 96, 98, 100 alternately pass sides 40 and corners 42 of housing. Decompression would occur as the rotors pass each empty interior corner 42 of housing 12, and compression would occur as the vanes pass the center of each side 40. A shock wave of this type would be created every 40 degrees of rotation of a vane.

Moreover, secondary pulsed standing shock waves may be produced as vanes 152, 180 pass by support pins 190, three of which are located proximate each rotor. Vanes 180 of the largest rotors, rotors 96, 98, 100, pass within about 0.1 inches of support pins 190. These shock waves would be produced every 120 degrees of rotation of a vane on a rotor due to compression of the flow as the vane passes each of the three support pins located near the rotor. Twenty-seven shock waves are generated for each rotation of a nonagon-shaped rotor. Thus, support pins 190 are employed to support the orifice plates and also to help generate shock waves. While in the described embodiment cylindrical support pins are employed for these purposes, a different arrangement can be used to support the orifice plates, and differently shaped members can be positioned in corners 42 opposite respective rotor vanes 150, 180 for generating the secondary shock waves.

Before a biological material, such as pieces of plants or fungi, is fed into mill 10, rotor assembly 38 is brought up to an operating speed of rotation. The spinning rotors generate a large air flow with negative back pressure through feed tube 78 and down through mill 10. Thus, any material fed into feed tube 78 will be immediately drawn in and accelerated rapidly towards distributor rotor 90.

As noted above, material may be broken apart while accelerating down feed chute 78 and turning direction exiting discharge opening 166. It is believed that discharge opening 166 acts as an orifice through which air and the feed-stock material flows into the larger-volume region between top plate 44 and distributor rotor 90. The flow through this first orifice provided by discharge opening 166 can cause a pressure change, which may be accompanied by a temperature change. The pressure change, along with the rapid acceleration of the particles exiting feed tube 78, can cause a first shock compression and/or expansion and an initial breaking apart of some particles.

A feed-stock biological material, such as plant or fungal material which is pre-cut to sizes of about 2 inches or less, is quickly entrained in the Coanda flow and flows through distributor rotor 90 between distributor rotor plate 148 and distributor ring 164. When the Coanda flow passes through orifice 138, the particles experience a rapid directional change and an increase in velocity with a corresponding pressure rise. The flow is immediately compressed because the volume between orifice plate 128 and rotor 92 is smaller than the volume between rotor 90 and orifice plate 128. This can also cause a rapid increase in pressure and an accompanying temperature increase.

This process of rapid acceleration, expansion, and compression is repeated as the flow passes through each succeeding stage and rounds the rotors and orifices. These rapid variations in pressure and acceleration of the flowing material may contribute to creating shock waves which pulverize material flowing through mill 10. In addition, the rapid compressing and decompressing of material in the flow can cause a build-up of piezoelectric energy and subsequent releases in the material, which may cause the break-up of some material into smaller sized particles. It is believed that the primary and secondary pulsed shock wave fronts are reinforced by shock waves created by piezoelectric energy releases in the flow. The rapid flow of material through the non-uniform electric and magnetic fields within mill 10, which are generated by the spinning rotors, may also contribute to piezoelectric compression and decompression of material in the flow, thus also contributing to generating shock waves in the flowing material.

Mill 10 heats a material being pulverized such that virtually all free moisture is driven off. Plant or fungal material having an initial moisture content of about 40% or less before processing comes out of mill 10 warmed to a temperature above ambient temperature to a temperature that depends upon the material and the operating conditions. A cooling jacket can be utilized to help limit the temperature rise of processed mater. Electric discharges from the material and the rapid expansion then compression after the flow passes through each orifice may increase the temperature of the flowing material and drive moisture out. The piezoelectric energy releases and frictional heating of particles in the flow likely contribute to the observed general increase in temperature of the pulverized material. However, flowing only air through mill 10 also causes housing 12 to warm above ambient temperature. Therefore, some of the heating effect is also probably due to pressure changes in the flowing material and energy dissipated from shock waves. Some of the heat is may be carried away by vaporizing water and other volatiles.

An added benefit of using RD mill 10 to liberate intracellular products from biological material is that it reduces the bacterial load of the processed material.

### Example 1

*Piper methysticum* (kava) is a cultivated plant, derived from wild species, which contains kava lactones. These lactones dull pain and have a relaxing, tranquilizing effect on the user. The kava lactones are stored in a resinous form in the roots and stems of the plant.

Dry, crudely chopped roots and stems were processed by single or double passages through RD mill 10. The rotors were turned at a rate of 3200 rpm. A single passage yielded a fine powder plus larger, woody particles visible to the naked eye. particles of three distinct size ranges are produced when kava plants are processed by an RD mill. The largest particles are cellulose, the middle size particles are resinous granules of kava lactones, and the smallest size particles include other material liberated from the cells.

Upon microscopic examination of the RD processed kava, particles of assorted sizes ranging from about 10 micrometers to over 100 micrometers were observed. Intact cells were absent except for their apparent presence in woody fragments. The RD processed kava was screened under vacuum and various particle size fractions were recovered. Assays for kava lactone content were performed. Kava lactones (six different chemical species) were found to compose 9.91% of the dry weight of the whole kava root that was processed by RD mill 10. Microscopic examination revealed numerous granules of fairly uniform size. These granules were retained by a 270 mesh screen.

The +270 mesh screened powder was placed in a 50% alcohol in water mixture. Denser particles sedimented quickly under unit gravity and formed a brownish sludge at the bottom of the container. More slowly sedimenting particles formed a yellowish white layer on top of the brownish layer within about 5 minutes. This slow sedimenting material contained 67.25% kava lactone by dry weight.

Processed kava that passed through 270 mesh screen was found to contain only 2.42% kava lactone by dry weight. Therefore processing with RD mill 10 yielded particles that are slow sedimenting and larger than 270 mesh which contain the bulk of the kava lactone present in the kava root. Processing kava with RD mill 10 apparently opens and fragments cell walls of the kava plant, thereby releasing kava lactones as small resinous particles.

Kava processed according to the described method produced a kava product having a significantly greater percentage concentration of kava lactone than can be obtained by grinding or any other known economically viable method. The kava product produced by RD mill 10 is essentially free of cellulose. It therefore has a greater purity than ground kava, which typically has a high percentage by weight of other cellular material, including cellulose. In addition, the kava lactones in the product processed by RD mill 10 is more efficacious because the kava lactones are substantially all liberated from cells. In contrast, much of the kava lactones in a ground kava product is still bound within intact or only partially broken cells, and so is not freely available.

The described process for liberating and concentrating kava lactones can also be used for liberating and concentrating other types of resinous materials from other plant species.

### Example 2

*Morinda citrifolia,* commonly known as noni or Indian mulberry, is a medicinal plant with several purported and demonstrated uses: antibacterial, laxative, hypotensive, anti-inflammatory, and immunostimulant. Dried, crudely chopped noni fruit or fruit containing up to 30% water by weight was fed into RD mill 10, which was operating at 2950 rpm. A single passage through RD mill 10 yielded a heterogeneous product composed of visible (about 0.5-1.0 mm) particles to microscopic particles (about 5-30 micrometers in diameter). Many of the smallest particles clustered together to form aggregates of various sizes. Noni with about 30% water content emerged from the machine as a dry, heterogenous mixture ranging from granular to fine powder.

When the processed material was extracted with water at 80°C, about 50% by weight of the starting material was recovered as water soluble/suspended fraction.

## Claims

1. A method of liberating an intracellular material from biological material having cells with cell walls, the method comprising:
flowing the biological material through a housing while subjecting the biological material to rapid pressure increases and decreases within the housing; and
opening the cell walls with the pressure increases and decreases, thereby liberating the intracellular material from the cells and producing a heterogenous mixture comprised of cell wall fragments and the intracellular material.

2. The method of claim 1, wherein the biological material includes at least one of plant or fungal material, and wherein the cell walls are formed of cellulose.

3. The method of claim 1, wherein the bioloigical material includes pieces of plant, fungal, or animal material.

4. The method of claim 3, further comprising separating the cells of the biological material from each other with the pressure increases and decreases.

5. The method of claim 1, further comprising vaporizing water liberated from the cells with the pressure increases and decreases, such that the mixture has a lower water content than the biological material.

6. The method of claim 1, further comprising vaporizing volatile compounds liberated from the cells with the pressure increases and decreases, such that the mixture has a lower volatile compound content than the pieces.

7. The method of claim 1, wherein the housing is **characterized by** a first end including an input adapted to introduce the biological material into the housing, a second end including an output adapted to remove the mixture, and longitudinally extending internal sides that form longitudinally extending interior corners where they meet, and wherein flowing the biological material includes rotating a rotor assembly within the housing that is **characterized by** a rotatable shaft extending longitudinally through the housing between the first and second ends, and a plurality of rotors coupled to the shaft for rotation therewith, wherein rotors of the plurality of rotors each comprise a rotor plate having a peripheral edge forming a plurality of apices, and vanes on a side of the rotor plate each extend approximately radially from an apex, wherein an orifice plate is positioned between adjacently located pairs of the plurality of rotors, each orifice plate extending inwardly from the internal sides of the housing to a central aperture which provides an orifice around the shaft, each of the central apertures being smaller than rotor plates of the corresponding pair of rotors, and wherein applying the alternatingly increasing and decreasing pressure to the flowing biological material includes causing the biological material to flow in an alternating outward and inward flow around peripheral edges of the rotor plates and through the orifices.

8. The method of claim 7, wherein the rotors are angularly offset from each other.

9. The method of claim 8, wherein subjecting the biological material to the rapid pressure increases and decreases further includes rotating the vanes of the rotors closely past circumferentially spaced members located proximate each of the rotors, wherein the members extend inwardly from the corners of the housing toward the rotors.

10. The method of claim 9, wherein flowing the biological material includes flowing the biological material in a Coanda flow substantially without high angle impacts on the rotor assembly, the orifice plates, or the interior sides of the housing.

11. A method as set forth in claim 1, for liberating an intracellular resinous material from cells of bulk plant matter, the method further comprising:
said step of opening walls of the cells with the pressure increases and decreases causing liberating the resinous material from the cells and producing a heterogenous mixture comprised of cell wall fragments and the resinous material;
placing particles of the mixture in a liquid;
sedimenting particles of the resinous material in the liquid; and
removing the sedimented particles of the resinous material.

12. The method of claim 11, wherein the liquid comprises water.

13. The method of claim 11, wherein the liquid further comprises an organic solvent.

14. The method of claim 11, wherein the particles placed in the liquid are a screened fraction of the mixture.

15. The method of claim 11, further comprising drying the sedimented particles.

16. The method of claim 11, wherein the plant matter comprises pieces of *Piper methysticum* (kava), and the resinous material comprises kava lactones.

17. A method as set forth in claim 1, wherein said biological material is comprised of cells having cell walls formed primarily of cellulose, said opening step comprising:
exceeding the elastic limit of the cell walls with the rapid pressure increases and decreases, thereby opening the cell walls and liberating the intracellular material.

18. The method of claim 17, further comprising exceeding the elastic limit of intercellular bonds between the cells with the rapid pressure increases and decreases, thereby separating cells from each other.

## Patentansprüche

1. Ein Verfahren zum Freisetzen eines intrazellulären Materials aus biologischem Material mit Zellen, mit Zellwänden, wobei das Verfahren Folgendes aufweist:
Fließen des biologischen Materials durch ein Gehäuse während das biologische Material schnellen Druckanstiegen und Druckabfällen innerhalb des Gehäuses ausgesetzt ist; und
Öffnen der Zellwände mit den Druckanstiegen und Druckabfällen, wodurch das intrazelluläre Material aus den Zellen freigegeben wird und
Erzeugen einer heterogenen Mischung aus Zellwandfragmenten und intrazellulärem Material.

2. Verfahren nach Anspruch 1, wobei das biologische Material Pflanzenmaterial und/oder Pilzmaterial aufweist und wobei die Zellwände aus Zellulose gebildet sind.

3. Verfahren nach Anspruch 1, wobei das biologische Material Teile aus Pflanzenmaterial, Pilzmaterial oder tierischem Material aufweist.

4. Verfahren nach Anspruch 3, wobei ferner die Zellen des biologischen Materials durch die Druckanstiege und Druckabfälle getrennt wird.

5. Verfahren nach Anspruch 1, wobei ferner Folgendes vorgesehen ist:
Verdampfung von den Zellen freigegebenen Wasser mit den Druckanstiegen und Druckabfällen, derart, dass die Mischung einen geringeren Wassergehalt, als das biologische Material besitzt.

6. Verfahren nach Anspruch 1, wobei ferner Folgendes vorgesehen ist:
Verdampfen flüchtiger Verbindungen freigesetzt von den Zellen von den Druckanstiegen und Druckabfällen derart, dass die Mischung einen niedrigem Gehalt an flüchtigen Verbindungen besitzt als die Teile.

7. Verfahren nach Anspruch 1, wobei das Gehäuse **gekennzeichnet ist durch** ein erstes Ende einschließlich eines Eingangs geeignet zur Einführung biologischen Materials in das Gehäuse, ein zweites Ende einschließlich eines Ausgangs geeignet zur Entfernung der Mischung, und sich längs erstreckende Innenseiten, die wo sie sich treffen, längs erstreckende Innenecken bilden,
und wobei das Fließen oder Strömen des biologischen Materials das Drehen einer Rotoranordnung innerhalb des Gehäuses umfasst, die **gekennzeichnet ist durch** eine drehbare Welle, die sich in Längsrichtung **durch** das Gehäuse zwischen den ersten und zweiten Enden erstreckt und eine Vielzahl von Rotoren gekuppelt mit der Welle zur Drehung damit, wobei die Rotoren der Vielzahl von Rotoren jeweils eine Rotorplatte aufweisen mit einer Umfangskante, die eine Vielzahl von Scheiteln bildet und mit Schaufeln auf einer Seite der Rotorplatte, wobei sich jede annähernd radial von einem Scheitel erstreckt, wobei eine Zumessplatte zwischen benachbart angeordneten Paaren, der Vielzahl von Rotoren angeordnet ist, wobei jede Zumessplatte sich nach innen von den Innenseiten des Gehäuses zu einer mittigen Öffnung erstreckt, die eine Zumessöffnung um die Welle herum vorsieht, wobei jede der Mittelöffnungen kleiner ist, als Rotorplatten des entsprechenden Paares von Rotoren, wobei das Anlegen des abwechselnd ansteigenden und abfallenden Drucks an das fließende oder strömende biologische Material einschließt, dass das biologische Material veranlasst wird, in einer abwechselnd nach außen und innen gerichteten Strömung bzw. Fluss um die Umfangskanten der Rotorplatten und **durch** die Zumessöffnungen zu fließen.

8. Verfahren nach Anspruch 7, wobei die Rotoren bezüglich einander winkelmässig versetzt sind.

9. Verfahren nach Anspruch 8, wobei das Aussetzen des biologischen Materials gegenüber den schnellen Druckanstiegen und -abfällen ferner das Drehen der Schaufeln der Rotoren umfasst und zwar dicht an den umfangsmässig beabstandeten Gliedern vorbei, die benachbart zu jedem der Rotoren liegen, wobei die Glieder sich nach innen von den Ecken des Gehäuses zu den Rotoren hin erstrecken.

10. Verfahren nach Anspruch 9, wobei das Strömen des biologischen Materials Folgendes umfasst: Strömen des biologischen Materials in einer Coanda-Strömung im Wesentlichen ohne Stöße auf die Rotoranordnung die Zumessöffnungsplatten oder die Innenseiten des Gehäuses unter einem großen Winkel.

11. Verfahren nach Anspruch 1, zur Freisetzung intrazellulären Harzmaterials aus Zellen einer Pflanzenmasse, wobei das Verfahren ferner Folgendes vorsieht:
Der Schritt des Öffnens der Wände der Zellen mit den Druckanstiegen und Druckabfällen bewirkt das Freisetzen des Harzmaterials aus den Zellen und das Erzeugen einer heterogenen Mischung aus Zellwandfragmenten und Harzmaterial;
Anordnen der Teilchen der Mischung in eine Flüssigkeit;
Sedimentieren der Teilchen des Harzmaterials in der Flüssigkeit; und
Entfernen der sedimentierten Teilchen des Harzmaterials.

12. Verfahren nach Anspruch 11, wobei die Flüssigkeit Wasser aufweist bzw. ist.

13. Verfahren nach Anspruch 11, wobei die Flüssigkeit ferner ein organisches Lösungsmittel aufweist.

14. Verfahren nach Anspruch 11, wobei die in der Flüssigkeit platzierten Teilchen eine gesiebte Fraktion bzw. ein gesiebter Teil der Mischung sind.

15. Verfahren nach Anspruch 11, wobei ferner das Trocknen der sedimentierten Teilchen vorgesehen ist.

16. Verfahren nach Anspruch 11, wobei das Pflanzenmaterial Teile aus Piper methysticum (Kava) und das Harzmaterial Kavalactone aufweist.

17. Verfahren nach Anspruch 1, wobei das biologische Material Zellen aufweist, mit Zellwänden in erster Linie gebildet aus Zellulose, wobei der Öffnungsschritt Folgendes vorsieht:
Überschreiten der Elastizitätsgrenze der Zellwände mit den schnellen Druckanstiegen und Druckabfällen, wodurch die Zellwände geöffnet werden und das intrazelluläre Material freigesetzt wird.

18. Verfahren nach Anspruch 17, wobei ferner das Übersteigen der elastischen Grenze der interzellulären Verbindungen zwischen den Zellen mit den schnellen Druckanstiegen und -abfällen vorgesehen wird, wodurch die Zellen voneinander getrennt werden.

## Revendications

1. Procédé de libération d'une matière intracellulaire à partir d'une matière biologique comportant des cellules et des parois de cellules, ce procédé comprenant :
faire s'écouler la matière biologique dans une enceinte tandis que l'on soumet la matière biologique à des augmentations et diminutions rapides de pression dans l'enceinte ;
ouvrir les parois de cellules au moyen des augmentations et diminutions de pression, libérant ainsi la matière biologique des cellules et produisant un mélange hétérogène constitué de fragments de parois de cellules et de la matière intracellulaire.

2. Procédé selon la revendication 1, dans lequel la matière biologique comprend au moins un matériau de type plante ou champignon et dans lequel les parois de cellules sont en cellulose.

3. Procédé selon la revendication 1, dans lequel la matière biologique comprend des éléments de matière de type plante, champignon ou animal.

4. Procédé selon la revendication 3, comprenant en outre la séparation des cellules de la matière biologique les unes des autres au moyen des augmentations et diminutions de pression.

5. Procédé selon la revendication 1, comprenant en outre la vaporisation de l'eau libérée à partir des cellules au moyen des augmentations et diminutions de pression de sorte que le mélange a un contenu en eau inférieur à la matière biologique.

6. Procédé selon la revendication 1, comprenant en outre la vaporisation de composés volatiles libérés à partir des cellules avec les augmentations et diminutions de pression de sorte que le mélange a un contenu en composés volatiles plus faible que les éléments.

7. Procédé selon la revendication 1, dans lequel l'enceinte est **caractérisée par** une première extrémité incluant une entrée adaptée à introduire la matière biologique dans l'enceinte, une seconde extrémité incluant une sortie adaptée à enlever le mélange, et des côtés internes s'étendant longitudinalement qui forment des coins internes s'étendant longitudinalement quand ils se recoupent, et dans lequel la circulation de la matière biologique inclut la rotation d'une structure de rotor dans l'enceinte qui est **caractérisée par** un arbre tournant s'étendant longitudinalement à travers l'enceinte entre la première et la seconde extrémité, et une pluralité de rotors couplés à l'arbre pour rotation avec celui-ci, chacun des rotors comprenant une plaque de rotor ayant un bord périphérique formant une pluralité de sommets et des vannes d'un côté de la plaque de rotor s'étendant chacune sensiblement radialement à partir d'un sommet, dans lequel une plaque à orifices est disposée entre des paires adjacentes de rotors, chaque plaque à orifices s'étendant vers l'intérieur à partir des côtés internes de l'enceinte vers une ouverture centrale qui constitue un orifice autour de l'arbre, chacune des ouvertures centrales étant plus petite que les plaques de rotor des paires correspondantes de rotors, et dans lequel l'application des augmentations et diminutions de pression alternées à la matière biologique en circulation inclut que l'on amène la matière biologique à circuler de façon alternée vers l'extérieur et vers l'intérieur autour des bords périphériques des plaques de rotor et à travers les orifices.

8. Procédé selon la revendication 7, dans lequel les rotors sont décalés angulairement les uns des autres.

9. Procédé selon la revendication 8, dans lequel le fait de soumettre la matière biologique à des augmentations et diminutions de pression inclut en outre la rotation des vannes des rotors très près d'éléments espacés de façon périphérique disposés près de chacun des rotors, dans lequel les éléments s'étendent vers l'intérieur à partir des coins de l'enceinte vers les rotors.

10. Procédé selon la revendication 9, dans lequel la circulation de la matière biologique inclut la circulation de la matière biologique selon un écoulement Coanda sensiblement sans impact angulaire élevé sur la structure de rotor, les plaques à orifices, ou les côtés internes de l'enceinte.

11. Procédé selon la revendication 1, pour libérer une matière intracellulaire résineuse de cellules d'un volume de matière végétale, le procédé comprenant en outre :
ladite étape d'ouverture des parois de cellule par les augmentations et diminutions de pression provoquant la libération du matériau résineux des cellules produisant un mélange constitué de fragments de parois de cellules et de la matière résineuse ;
placer des particules du mélange dans un liquide ;
sédimenter des particules de matière résineuse dans le liquide ; et
enlever les particules sédimentées de la matière résineuse.

12. Procédé selon la revendication 11, dans lequel le liquide comprend de l'eau.

13. Procédé selon la revendication 11, dans lequel le liquide comprend en outre un solvant organique.

14. Procédé selon la revendication 11, dans lequel les particules placées dans le liquide sont une partie filtrée du mélange.

15. Procédé selon la revendication 11, comprenant en outre le séchage des particules sédimentées.

16. Procédé selon la revendication 11, dans lequel la matière de type plante comprend des morceaux de Piper methysticum (kava), et la matière résineuse comprend kava lactones.

17. Procédé selon la revendication 1, dans lequel la matière biologique est constituée de cellules ayant des parois cellulaires formées essentiellement de cellulose, l'étape d'ouverture comprenant :
dépasser la limite élastique des parois des cellules au moyen des augmentations et diminutions de pression rapides, ouvrant ainsi les parois cellulaires et libérant la matière intracellulaire.

18. Procédé selon la revendication 17, comprenant en outre l'étape consistant à dépasser la limite élastique des liaisons intercellulaires entre les cellules par les augmentations et diminutions de pression, séparant ainsi les cellules les unes des autres.
